# EUROPÄISCHE PATENTSCHRIFT

(11) **EP 2 493 956 B1**
(45) Veröffentlichungstag und Bekanntmachung des Hinweises auf die Patenterteilung: **18.04.2018**
(21) Anmeldenummer: 10771440.4
(22) Anmeldetag: 28.10.2010
(51) Int. Cl.: C08G 65/336, C08G 65/08, C08F 230/08

(54) **ZEITMODIFIZIERT FEUCHTIGKEITSAUSHÄRTENDE FORMULIERUNGEN**
MOISTURE-CURING FORMULATIONS WITH TIME-MODIFIED CURING BEHAVIOR
FORMULATIONS DURCISSANT À L'HUMIDITÉ AYANT UNE RÉTICULATION VARIABLE AVEC LE TEMPS

(30) Priorität: 30.10.2009 DE 102009046268; 06.01.2010 DE 102010000705
(43) Veröffentlichungstag der Anmeldung: 05.09.2012
(73) Patentinhaber: Henkel AG & Co. KGaA, 40589 Düsseldorf (DE)
(72) Erfinder: ZANDER, Lars, 41569 Rommerskirchen (DE); GENTSCHEV, Pavel, 4823 Bad Goisern (DE)
(86) Internationale Anmeldenummer: PCT/EP2010/066349
(87) Internationale Veröffentlichungsnummer: WO 2011/051385

(56) Entgegenhaltungen:
- EP-A1- 1 288 247
- EP-A2- 1 591 488
- US-A1- 2002 115 770
- US-A1- 2009 145 067
- DATABASE REGISTRY [Online] CHEMICAL ABSTRACTS SERVICE, COLUMBUS, OHIO, US; 16. November 1984 (1984-11-16), "TINUVIN 327", XP002629922, Database accession no. 3864-99-1
- DATABASE REGISTRY [Online] CHEMICAL ABSTRACTS SERVICE, COLUMBUS, OHIO, US; 16. November 1984 (1984-11-16), "TINUVIN 328", XP002629923, Database accession no. 25973-55-1
- DATABASE REGISTRY [Online] CHEMICAL ABSTRACTS SERVICE, COLUMBUS, OHIO, US; 16. November 1984 (1984-11-16), "U-220", XP002629924, Database accession no. 22673-19-4

## Beschreibung

Die Erfindung betrifft Zusammensetzungen auf Basis silylterminierter Polymere. Insbesondere betrifft die Erfindung verzögert aushärtende derartige Zusammensetzungen, Verfahren zu ihrer Herstellung und ihre Verwendung in Kleb-, Dicht- und Beschichtungsstoffen.

Einkomponentige, feuchtigkeitshärtende Kleb- und Dichtstoffe spielen seit Jahren eine bedeutende Rolle bei zahlreichen technischen Anwendungen. Neben den Polyurethan-Kleb- und Dichtstoffen mit freien Isocyanatgruppen und den traditionellen Silikon-Kleb- und Dichtstoffen auf der Basis von Dimethylpolysiloxanen sind in letzter Zeit auch verstärkt die so genannten silanmodifizierten Kleb- und Dichtstoffe eingesetzt worden. Gegenüber den Polyurethan-Kleb- und Dichtstoffen weisen die silanmodifizierten Kleb- und Dichtstoffe den Vorteil auf, dass sie frei von Isocyanatgruppen, insbesondere von monomeren Diisocyanaten, sind. Ferner zeichnen sie sich durch ein breites Haftspektrum auf einer Vielzahl von Substraten ohne Oberflächenvorbehandlung durch Primer aus.

Polymersysteme, die über reaktive Silylgruppen verfügen, sind also prinzipiell bekannt. In Gegenwart von Luftfeuchtigkeit sind Polymere, die über Silylgruppen mit hydrolysierbaren Substituenten verfügen, bereits bei Raumtemperatur in der Lage, unter Abspaltung der hydrolysierten Reste miteinander zu kondensieren. Je nach Gehalt an Silylgruppen mit hydrolysierbaren Substituenten und dem Aufbau dieser Silylgruppen bilden sich dabei hauptsächlich langkettige Polymere (Thermoplaste), relativ weitmaschige, dreidimensionale Netzwerke (Elastomere) oder hochvernetzte Systeme (Duroplaste). Die Polymere weisen in der Regel ein organisches Grundgerüst auf, das an den Enden z. B. Alkoxy- oder Acyloxysilylgruppen trägt. Bei dem organischen Grundgerüst kann es sich beispielsweise um Polyurethane, Polyester, Polyether etc. handeln.

Um ein schnelles Aushärten der Zusammensetzungen nach dem Verkleben zu ermöglichen, werden den Formulierungen in der Regel Härtungskatalysatoren zugesetzt, bei denen es sich meistens um Metallorganyle, beispielsweise auf Basis von Zinn oder Eisen, handelt. Das schnelle Aushärten der Zusammensetzungen ist einerseits erwünscht, um zügig einen stabilen Verbund zwischen zwei Substraten herstellen zu können. Andererseits bieten schnell aushärtende Systeme nur eine kurze Verarbeitungsphase und damit nur kurzzeitige Korrekturmöglichkeiten unmittelbar nach der Anwendung, was in Einzelfällen die Anwender überfordert. Wünschenswert ist daher eine angemessene Verarbeitungsphase mit einer anschließenden schnellen Aushärtung.

DE-OS 1956672 beschreibt Mehrkomponenten-Klebstoffe auf Basis von Polyisocyanaten und Polyhydroxyverbindungen, denen ein Organozinn-Härtungsgeschwindigkeits-Katalysator und ein Zeitkatalyse-Modifizierungsmittel aus der Gruppe β-Dicarbonyl-Verbindungen, α-Hydroxy-Ketone, kondensierte aromatische β-Hydroxy-Ketone und Stickstoff-heterocyclische, kondensierte aromatische β-Hydroxy-Verbindungen zugesetzt wurden. Derartige Zusammensetzungen können jedoch bei bestimmten Eigenschaften, beispielsweise hinsichtlich des Haftspektrums oder der elastischen Eigenschaften, Nachteile aufweisen.

EP 0549210 A2 beschreibt thermisch verformbare Zusammensetzungen, die Polymere mit hydrolysierbaren Silylgruppen enthalten, über die ein Nachhärten im Anschluss an die thermische Verformung erreicht wird. Bei den Polymeren handelt es sich um Polyolefine, in die olefinisch ungesättigte Silane einpolymerisiert werden. Um ein Verspröden vor der thermischen Verformung zu verhindern, wird neben dem Silan-Kondensations-Katalysator eine funktionelle organische Verbindung zugegeben, die neben mindestens einer Hydoxy-Gruppe mindestens eine Amino- oder Carboxy-Gruppe aufweist. Die Zusammensetzungen der EP 0549210 A2 ergeben Formkörper wie zum Beispiel Kabelummantelungen und sind insbesondere wegen ihrer geringen Elastizität nicht als Kleb- oder Dichtstoffe geeignet.

Es besteht also ein Bedarf an Kleb-, Dicht- und Beschichtungsstoffen, die ein breites Haftspektrum und gute Elastizitätswerte mit weiteren vorteilhaften Eigenschaften kombinieren. Aufgabe der vorliegenden Erfindung ist es daher, eine vernetzbare Zusammensetzung zur Verfügung zu stellen, welche die Grundlage für Kleb-, Dicht- und Beschichtungsstoffe mit einem breiten Haftspektrum und guten Elastizitätswerten sowie einer anwenderfreundlichen, verlängerten Verarbeitungsphase und nachfolgend einer möglichst kurzen Durchhärtungszeit bildet.

Die erfindungsgemäße Lösung der Aufgabe ist den Patentansprüchen zu entnehmen. Sie besteht im Wesentlichen aus einer härtbaren Zusammensetzung, die als Komponenten
a) mindestens einen Polyether und/oder mindestens einen Polyacrylsäureester mit mindestens einer Endgruppe der allgemeinen Formel (I)

   -Aₙ-R-SiXYZ (I),

   worin
   A eine zweibindige Bindegruppe,
   R ein zweibindiger, gegebenenfalls ein Heteroatom enthaltender Kohlenwasserstoffrest mit 1 - 12 C-Atomen, und
   X, Y, Z unabhängig voneinander C₁-C₈-Alkyl-, C₁-C₈-Alkoxy- oder C₁-C₈-Acyloxyreste sind, wobei mindestens einer der Reste eine C₁-C₈-Alkoxy- oder C₁-C₈-Acyloxygruppe ist, und
   n 0 oder 1 ist; sowie
b) mindestens eine zinnorganische Verbindung,
c) mindestens eine Verbindung, die frei von Zinn- und Siliziumatomen ist und die mindestens zwei Funktionen aufweist, die jeweils ausgewählt sind aus: Carboxy-, Carbonyl-, Hydroxygruppen sowie Stickstoffatomen, die Bestandteil eines Ringsystems mit aromatischem Charakter sind,
umfasst.

Eine derartige Zusammensetzung zeigt hervorragende Hafteigenschaften auf verschiedensten Substraten, ermöglicht durch die sehr gute Dehnbarkeit nach der Aushärtung hochelastische Verklebungen und lässt dem Anwender ausreichend Zeit für Korrekturen nach dem Auftrag, indem sie eine verlängerte Hautbildungszeit (skin-over-time) aufweist, nach dieser aber beschleunigt durchhärtet. Die mit einer solchen Zusammensetzung hergestellten Verklebungen zeigen daher nach Aushärtung gute Festigkeitswerte, die eine stabile und belastbare Verklebung indizieren.

Erfindungsgemäß bevorzugt ist eine härtbare Zusammensetzung, die als Komponenten
a) mindestens einen Polyether und/oder mindestens einen Polyacrylsäureester mit mindestens einer Endgruppe der allgemeinen Formel (I)

   -Aₙ-R-SiXYZ (I),

   worin
   A eine zweibindige Bindegruppe,
   R ein zweibindiger gegebenenfalls ein Heteroatom enthaltender Kohlenwasserstoffrest mit 1 - 12 C-Atomen, und
   X, Y, Z unabhängig voneinander C₁-C₈-Alkyl-, C₁-C₈-Alkoxy- oder C₁-C₈-Acyloxyreste sind, wobei mindestens einer der Reste eine C₁-C₈-Alkoxy- oder C₁-C₈-Acyloxygruppe ist, und
   n 0 oder 1 ist; sowie
b) mindestens eine zinnorganische Verbindung,
c) mindestens eine Verbindung, die frei von Zinn- und Siliziumatomen ist und die mindestens zwei Funktionen aufweist, die jeweils ausgewählt sind aus: Carboxy-, Carbonyl-, Hydroxygruppen sowie Stickstoffatomen, die Bestandteil eines Ringsystems mit aromatischem Charakter sind, wobei das Ringsystem mit aromatischem Charakter ein Stickstoffatom als einziges Heteroatom enthält,
umfasst.

Besonders bevorzugt ist eine härtbare Zusammensetzung, die als Komponenten
a) mindestens einen Polyether und/oder mindestens einen Polyacrylsäureester mit mindestens einer Endgruppe der allgemeinen Formel (I)

   -Aₙ-R-SiXYZ (I),

   worin
   A eine zweibindige Bindegruppe,
   R ein zweibindiger gegebenenfalls ein Heteroatom enthaltender Kohlenwasserstoffrest mit 1 - 12 C-Atomen, und
   X, Y, Z unabhängig voneinander C₁-C₈-Alkyl-, C₁-C₈-Alkoxy- oder C₁-C₈-Acyloxyreste sind, wobei mindestens einer der Reste eine C₁-C₈-Alkoxy- oder C₁-C₈-Acyloxygruppe ist, und
   n 0 oder 1 ist; sowie
b) mindestens eine zinnorganische Verbindung,
c) mindestens eine Verbindung, die frei von Zinn- und Siliziumatomen ist und die mindestens zwei Funktionen aufweist, von denen eine ausgewählt ist aus Carboxy-, Carbonyl-, Hydroxygruppen und bevorzugt eine Hydroxygruppe ist und die zweite entweder ein Stickstoffatom als Bestandteil eines Ringsystems mit aromatischem Charakter ist, wobei das Ringsystem bevorzugt ein Stickstoffatom als einziges Heteroatom enthält, oder eine Carboxygruppe ist,
umfasst.

Unter einer härtbaren Zusammensetzung wird ein Stoff oder eine Mischung aus mehreren Stoffen verstanden, der beziehungsweise die durch physikalische oder chemische Maßnahmen härtbar ist. Dabei können diese chemischen oder physikalischen Maßnahmen beispielsweise in der Zuführung von Energie in Form von Wärme, Licht oder sonstiger elektromagnetischer Strahlung, aber auch in einfachster Inkontaktbringung mit Luftfeuchtigkeit, Wasser oder einer reaktiven Komponente bestehen.

Unter einem Polyether wird ein Polymer verstanden, dessen organische Wiederholungseinheiten Ether-Funktionalitäten C-O-C in der Hauptkette enthalten. Nicht zu den Polyethern werden damit Polymere mit seitenständigen Ether-Gruppen gerechnet, wie zum Beispiel die Celluloseether, Stärkeether und Vinylether-Polymere. Auch Polyacetale wie das Polyoxymethylen (POM) werden im Allgemeinen nicht zu den Polyethern gezählt.

Unter einem Polyacrylsäureester wird ein Polymer auf der Basis von Acrylsäureestern verstanden, das daher als Wiederholungseinheit das Strukturmotiv -CH₂-CH(COOR)- aufweist, worin R für lineare, verzweigte, cyclische und/oder auch funktionelle Substituenten enthaltende Alkylreste steht, beispielsweise für Methyl-, Ethyl-, Isopropyl-, Cyclohexyl, 2-Ethylhexyl-, oder 2-Hydroxyethylreste steht.

Die erfindungsgemäße Zusammensetzung enthält in der Komponente a) bevorzugt einen Polyether. Polymere, die Polyether als Grundgerüst enthalten, weisen nicht nur an den Endgruppen, sondern auch im Polymerrückgrat eine flexible und elastische Struktur auf. Damit lassen sich Zusammensetzungen herstellen, die ausgezeichnete elastische Eigenschaften aufweisen. Dabei sind Polyether nicht nur in ihrem Grundgerüst flexibel, sondern gleichzeitig beständig. So werden sie beispielsweise von Wasser und Bakterien nicht angegriffen oder zersetzt. Im Rahmen der vorliegenden Erfindung werden unter Verfügbarkeitsaspekten besonders bevorzugt Polyether auf der Basis von Polyethylenoxid und/oder Polypropylenoxid in der Komponente a) eingesetzt.

Bevorzugt enthält die Komponente a) mindestens einen alkoxy- und/oder acyloxysilanterminierten Polyether, der ein Molekulargewicht Mₙ von 4.000 bis 100.000, vorzugsweise 8.000 bis 50.000, besonders bevorzugt 10.000 bis 30.000, insbesondere 15.000 bis 25.000 g/mol aufweist. Unter dem Molekulargewicht Mₙ wird das zahlenmittlere Molekulargewicht des Polymeren verstanden. Im Sinne der vorliegenden Erfindung wird das zahlenmittlere Molekulargewicht Mₙ ebenso wie das gewichtsmittlere Molekulargewicht M_{w} durch Gelpermeationschromatographie (GPC) mit Polystyrol als Standard bestimmt. Ein solches Verfahren ist dem Fachmann bekannt. Die angegebenen Molekulargewichte sind besonders vorteilhaft, da die entsprechenden Zusammensetzungen ein ausgewogenes Verhältnis von Viskosität (leichte Verarbeitbarkeit), Festigkeit und Elastizität aufweisen. Sehr vorteilhaft ist diese Kombination in einem Molekulargewichtsbereich (Mₙ) von 12.000 bis 20.000, insbesondere von 14.000 bis 18.000, ausgeprägt.

Vorzugsweise ist im Rahmen der vorliegenden Erfindung in der Komponente a) mindestens ein Polyether enthalten, bei dem das Verhältnis M_{w}/Mₙ kleiner als 1,5 ist. Das Verhältnis M_{w}/Mₙ, das auch als Polydispersität bezeichnet wird, gibt die Breite der Molmassenverteilung und damit der unterschiedlichen Polymerisationsgrade der einzelnen Ketten bei polydispersen Polymeren an. Für viele Polymerisate und Polykondensate gilt für die Polydispersität ein Wert von etwa 2. Strenge Monodispersität wäre bei einem Wert von 1 gegeben. Die im Rahmen der vorliegenden Erfindung bevorzugte Polydispersität von kleiner als 1,5 deutet auf eine vergleichsweise enge Molekulargewichtsverteilung und damit auf die spezifische Ausprägung mit dem Molekulargewicht zusammenhängender Eigenschaften, wie z. B. der Viskosität, hin. Besonders bevorzugt weist mindestens ein alkoxy- und/oder acyloxysilanterminierter Polyether der Komponente a) eine Polydispersität (M_{w}/Mₙ) von kleiner als 1,3 auf.

Der/die in der Komponente a) bevorzugt eingesetzten Polyether zeichnen sich ferner bevorzugt durch eine niedrige Anzahl von Doppelbindungen an den Enden der Polymerkette aus. Diese so genannte terminale Ungesättigtheit resultiert aus einer unerwünschten Nebenreaktion bei der Polymerisation niedermolekularer Diole mit Alkylenoxiden. Im Ergebnis liegt ein bestimmter Anteil an Mono-Hydroxypolyethern vor, die nur an einem Kettenende silyliert werden können und dementsprechend auch nur über ein Kettenende vernetzen. Dies hat nachteilige Auswirkungen auf die Funktionalität der Polyether und der daraus hergestellten Zusammensetzungen. Polyether mit niedriger Anzahl terminaler Doppelbindungen sind beispielsweise durch die so genannte Double-Metal-Cyanide-Katalyse (DMC-Katalyse) herstellbar. Bevorzugt enthält die Komponente a) mindestens einen Polyether, der eine terminale Ungesättigtheit von kleiner als 0,07 meq/g, bestimmt durch die Methode ASTM D4671, aufweist.

Der/die Polyether und/oder Polyacrylsäureester der Komponente a) weist/weisen mindestens eine Endgruppe der allgemeinen Formel (I)

-Aₙ-R-SiXYZ (I)

auf. Dabei versteht man unter einer zweibindigen oder bivalenten Bindegruppe A eine zweibindige chemische Gruppe, die das Polymergerüst des alkoxy- und/oder acyloxysilanterminierten Polymers mit dem Rest R der Endgruppe verknüpft. Die zweibindige Bindegruppe A kann beispielsweise bei der Herstellung des alkoxy- und/oder acyloxysilanterminierten Polyether- und/oder Polyacrylsäureesterpolymers ausgebildet werden, zum Beispiel als Urethangruppe durch die Reaktion eines mit Hydroxygruppen funktionalisierten Polyethers mit einem Isocyanatosilan. Dabei kann die bivalente Bindegruppe von im zugrunde liegenden Polymergerüst auftretenden Strukturmerkmalen sowohl unterscheidbar als auch nicht unterscheidbar sein. Letzteres liegt beispielsweise vor, wenn sie mit den Verknüpfungspunkten der Wiederholungseinheiten des Polymergerüsts identisch ist.

A ist bevorzugt eine Amid-, Carbamat-, Harnstoff-, Imino-, Carboxylat-, Carbamoyl-, Amidino-, Carbonat-, Sulfonat- oder Sulfinatgruppe oder ein Sauerstoff- oder Stickstoffatom. Die Bindegruppe A kann bei der Herstellung der silylterminierten Polymere ausgebildet werden, indem das Gerüstpolymer mit einer reaktiven Verbindung, die die -R-SiXYZ-Sequenz trägt, umgesetzt wird.
Besonders bevorzugt als Bindegruppe A sind Urethan- und Harnstoffgruppen, die durch Umsetzung bestimmter funktioneller Gruppen eines Prepolymers mit einem Organosilan, welches eine weitere funktionelle Gruppe trägt, erhalten werden können. Urethangruppen können zum Beispiel entstehen, wenn entweder das Polymergerüst terminale Hydroxygruppen enthält und als weitere Komponente Isocyanatosilane eingesetzt werden, oder wenn umgekehrt ein Polymer, welches endständige Isocyanatgruppen aufweist, mit einem terminale Hydroxygruppen enthaltenden Alkoxysilan umgesetzt wird. Auf ähnliche Weise können Harnstoffgruppen erhalten werden, wenn eine terminale primäre oder sekundäre Aminogruppe - entweder am Silan oder am Polyether und/oder Polyacrylsäureester - eingesetzt wird, die mit einer im jeweiligen Reaktionspartner vorhandenen terminalen Isocyanatgruppe reagiert. Das bedeutet, dass entweder ein Aminosilan mit einem terminale Isocyanatgruppen aufweisenden Polyether und/oder Polyacrylsäureester oder ein terminal mit einer Aminogruppe substituierter Polyether und/oder Polyacrylsäureester mit einem Isocyanatosilan zur Reaktion gebracht wird. Urethan- und Harnstoffgruppen erhöhen vorteilhaft die Festigkeit der Polymerketten und des gesamten vernetzten Polymers.

n ist 0 oder 1, das heißt die zweibindige Bindegruppe A verknüpft das Polymergrundgerüst mit dem Rest R (n = 1) oder das Polymergerüst ist direkt mit dem Rest R verbunden bzw. verknüpft (n = 0). Der Rest R ist ein zweibindiger, gegebenenfalls ein Heteroatom enthaltender Kohlenwasserstoffrest mit 1 bis 12 Kohlenstoffatomen. Als Heteroatom kann beispielsweise Sauerstoff (O) oder Stickstoff (N) enthalten sein. Bei dem Kohlenwasserstoffrest kann es sich beispielsweise um einen geradkettigen oder verzweigten oder cyclischen, substituierten oder unsubstituierten Alkylenrest handeln. Der Kohlenwasserstoffrest kann gesättigt oder ungesättigt sein.

R ist bevorzugt ein Kohlenwasserstoffrest mit 1 bis 6 C-Atomen. Auch über die Länge der Kohlenwasserstoffreste, die das Bindeglied zwischen Polymergerüst und Silylrest bilden, kann die Aushärtungsgeschwindigkeit der Zusammensetzung beeinflusst werden. Stärker bevorzugt ist R ein Methylen-, Ethylen- oder n-Propylenrest. Besonders bevorzugt werden Methylen- und n-Propylenreste eingesetzt. Alkoxysilan-terminierte Verbindungen mit einer Methylengruppe als Bindeglied zum Polymergerüst - sogenannte α-Silane - weisen eine besonders hohe Reaktivität der abschließenden Silylgruppe auf, was zu verkürzten Abbindezeiten und damit zu einer sehr schnellen Aushärtung von Formulierungen auf der Basis solcher Polymere führt.

Generell führt eine Verlängerung der verbindenden Kohlenwasserstoffkette zu einer verminderten Reaktivität der Polymere. Insbesondere die γ-Silane - sie enthalten den unverzweigten Propylenrest als Bindeglied - weisen ein ausgewogenes Verhältnis zwischen nötiger Reaktivität (akzeptable Aushärtungszeiten) und verzögerter Aushärtung (offene Zeit, Möglichkeit zur Korrektur nach erfolgter Verklebung) auf. Durch ein bewusstes Kombinieren von α- und γ-Alkoxysilan-terminierten Bausteinen kann somit die Aushärtungsgeschwindigkeit der Systeme wunschgemäß beeinflusst werden.

X, Y und Z sind unabhängig voneinander C₁-C₈-Alkylreste, C₁-C₈-Alkoxyreste oder C₁-C₈-Acyloxyreste. Dabei muss mindestens einer der Reste X, Y, Z eine hydrolysierbare Gruppe, das heißt ein C₁-C₈-Alkoxyrest oder ein C₁-C₈-Acyloxyrest sein. Als hydrolysierbare Gruppen werden vorzugsweise Alkoxygruppen, insbesondere Methoxy-, Ethoxy-, Propyloxy- und Butyloxygruppen, gewählt. Dies ist vorteilhaft, da bei der Aushärtung Alkoxygruppen enthaltender Zusammensetzungen keine die Schleimhäute reizenden Stoffe freigesetzt werden. Die gebildeten Alkohole sind in den freigesetzten Mengen unbedenklich und verdunsten. Daher eignen sich solche Zusammensetzungen insbesondere für den Heimwerkerbereich. Als hydrolysierbare Gruppen können jedoch auch Acyloxygruppen, wie beispielsweise eine Acetoxygruppe -O-CO-CH₃, verwendet werden.

Der/die alkoxy- und/oder acyloxysilanterminierte(n) Polyether und/oder Poylacrylsäureester der Formel (I) weist/weisen bevorzugt mindestens zwei Endgruppen der allgemeinen Formel (I) auf. Jede Polymerkette enthält damit mindestens zwei Verknüpfungsstellen, an denen sich unter Abspaltung der hydrolysierten Reste in Gegenwart von Luftfeuchtigkeit die Kondensation der Polymere vollziehen kann. Auf diese Weise wird eine regelmäßige und schnelle Vernetzbarkeit erreicht, so dass Verklebungen mit guten Festigkeiten erhalten werden können. Darüber hinaus lässt sich über die Menge und den Aufbau der hydrolysierbaren Gruppen - z. B. Verwendung von Di- oder Trialkoxysilylgruppen, Methoxygruppen oder längeren Resten usw. - die Ausgestaltung des erzielbaren Netzwerks als langkettiges System (Thermoplaste), relativ weitmaschiges dreidimensionales Netzwerk (Elastomere) oder hoch vernetztes System (Duroplaste) steuern, so dass damit unter anderem die Elastizität, die Flexibilität und die Hitzebeständigkeit der fertig vernetzten Zusammensetzungen beeinflusst werden können.

Bevorzugt ist X eine Alkylgruppe und Y und Z sind jeweils eine Alkoxygruppe, oder X, Y und Z sind jeweils eine Alkoxygruppe. Generell verfügen Polymere, die Di- bzw. Trialkoxysilylgruppen enthalten, über hoch reaktive Verknüpfungsstellen, die ein schnelles Aushärten, hohe Vernetzungsgrade und damit gute Endfestigkeiten ermöglichen. Der besondere Vorteil von Dialkoxysilylgruppen liegt darin, dass die entsprechenden Zusammensetzungen nach der Aushärtung elastischer, weicher und flexibler sind als Trialkoxysilylgruppen enthaltende Systeme. Sie sind deshalb insbesondere für eine Anwendung als Dichtstoffe geeignet. Darüber hinaus spalten sie bei der Aushärtung noch weniger Alkohol ab und sind deshalb besonders interessant, wenn die Menge an freigesetztem Alkohol reduziert werden soll.
Mit Trialkoxysilylgruppen hingegen lässt sich ein höherer Vernetzungsgrad erreichen, was besonders vorteilhaft ist, wenn nach der Aushärtung eine härtere, festere Masse gewünscht wird. Darüber hinaus sind Trialkoxysilylgruppen reaktiver, vernetzen also schneller und senken somit die benötigte Menge an Katalysator, und sie weisen Vorteile beim "kalten Fluss" - der Formstabilität eines entsprechenden Klebstoffs unter dem Einfluss von Kraft- und gegebenenfalls Temperatureinwirkung - auf.

Besonders bevorzugt sind X, Y und Z jeweils unabhängig voneinander eine Methyl-, eine Ethyl-, eine Methoxy- oder eine Ethoxygruppe. Methoxy- und Ethoxygruppen als vergleichsweise kleine hydrolysierbare Gruppen mit geringem sterischen Anspruch sind sehr reaktiv und ermöglichen somit ein schnelles Aushärten auch bei geringem Katalysatoreinsatz. Sie sind deshalb insbesondere für Systeme interessant, bei denen ein schnelles Aushärten erwünscht ist, wie beispielsweise bei Klebstoffen, die eine hohe Anfangshaftung aufweisen sollen. Besonders bevorzugt sind X, Y und Z eine Methyl- oder eine Methoxygruppe. Verbindungen mit Alkoxysilylgruppen weisen je nach Natur der Alkylreste am Sauerstoffatom unterschiedliche Reaktivitäten bei chemischen Reaktionen auf. Dabei zeigt innerhalb der Alkoxygruppen die Methoxygruppe die größte Reaktivität. Auf derartige Silylgruppen kann also zurückgegriffen werden, wenn eine besonders schnelle Aushärtung gewünscht wird. Höhere aliphatische Reste wie Ethoxy bewirken eine im Vergleich zu Methoxygruppen bereits geringere Reaktivität der terminalen Alkoxysilylgruppe und können vorteilhaft zur Ausprägung abgestufter Vernetzungsgeschwindigkeiten eingesetzt werden.
Interessante Gestaltungsmöglichkeiten eröffnen auch Kombinationen beider Gruppen. Wird zum Beispiel für X Methoxy und für Y Ethoxy innerhalb derselben Alkoxysilylgruppe gewählt, kann die gewünschte Reaktivität der abschließenden Silylgruppen besonders feinstufig eingestellt werden, falls ausschließlich Methoxygruppen tragende Silylgruppen als zu reaktiv und die Ethoxygruppen tragenden Silylgruppen für den Einsatzzweck als zu träge empfunden werden.

Neben Methoxy- und Ethoxygruppen können selbstverständlich auch größere Reste als hydrolysierbare Gruppen eingesetzt werden, die naturgemäß eine geringere Reaktivität aufweisen. Dies ist besonders dann von Interesse, wenn auch über die Ausgestaltung der Alkoxygruppen eine verzögerte Aushärtung erreicht werden soll.

Die erfindungsgemäße härtbare Zusammensetzung enthält als Komponente b) mindestens eine zinnorganische Verbindung. Die Komponente b) wird der Zusammensetzung insbesondere als Vernetzungskatalysator zugegeben. Geeignete Zinnorganyle sind beispielsweise die 1,3-Dicarbonylverbindungen des zwei- bzw. vierwertigen Zinns, beispielsweise die Acetylacetonate wie Di(n-butyl)zinn-(IV)-di(acetylacetonat), Di(n-octyl)zinn-(IV)-di(acetylacetonat), (n-octyl)(n-butyl)-zinn-(IV)-di(acetylacetonat); die Dialkylzinn-(IV)-Dicarboxylate, zum Beispiel Di-n-butylzinndilaurat, Di-n-butylzinnmaleat, Di-n-butylzinndiacetat, Di-n-octylzinndiacetat oder die entsprechenden Dialkoxylate, zum Beispiel Di-n-butylzinndimethoxid; sowie die Zinn-(II)-carboxylate wie Zinn(II)octoat oder Zinn(II)phenolat.
Ferner eignen sich beispielsweise folgende Zinnverbindungen: Ethylsilicat, Dimethylmaleat, Diethylmaleat, Dioctylmaleat, Dimethylphthalat, Diethylphthalat, Dioctylphthalat, Di(n-butyl)zinn(IV)-di(methylmaleat), Di(n-butyl)zinn(IV)-di(butylmaleat), Di(n-octyl)zinn(IV)-di(methylmaleat), Di(n-octyl)zinn(IV)-di(butylmaleat), Di(n-octyl)zinn(IV)-di(iso-octylmaleat), Di(n-butyl)zinn(IV)sulfid, Di(n-butyl)zinn(IV)oxid, Di(n-octyl)zinn(IV)oxid, (n-Butyl)₂Sn(SCH₂COO), (n-Octyl)₂Sn(SCH₂COO), (n-Octyl)₂Sn(SCH₂CH₂COO), (n-Octyl)₂Sn(SCH₂CH₂COOCH₂CH₂OCOCH₂S), (n-Butyl)₂Sn(SCH₂COO-i-C₈H₁₇)₂, (n-Octyl)₂Sn(SCH₂COO-i-C₈H₁₇)₂, (n-Octyl)₂Sn(SCH₂COO-n-C₈H₁₇)₂. Besonders bevorzugt ist die Komponente b) ein Dialkylzinn-(IV)-Dicarboxylat, insbesondere Di-n-butylzinndilaurat. Die Komponente b) wird bevorzugt in einer Menge von 0,01 bis 10 Gew.-%, bezogen auf das Gesamtgewicht der Zusammensetzung, eingesetzt. Es können auch Mischungen mehrerer Katalysatoren eingesetzt werden, um vorteilhafte Effekte zu kombinieren.

Als Komponente c) enthält die erfindungsgemäße Zusammensetzung mindestens eine Verbindung, die frei von Zinn- und Siliziumatomen ist und die mindestens zwei Funktionen aufweist, die jeweils ausgewählt sind aus: Carboxy-, Carbonyl-, Hydroxygruppen sowie Stickstoffatomen, die Bestandteil eines Ringsystems mit aromatischem Charakter sind. Unter Carboxygruppen werden dabei Funktionalitäten der Struktur-COOH verstanden, unter Hydroxygruppen Funktionalitäten der Struktur-OH und unter Carbonylgruppen Funktionalitäten der Struktur C=O. Die mindestens zwei Funktionen oder funktionellen Gruppen können grundsätzlich gleich oder verschieden sein. Bevorzugt weist mindestens eine Verbindung der Komponente c) mindestens zwei unterschiedliche Funktionen auf, die jeweils ausgewählt sind aus Carboxy-, Carbonyl-, Hydroxygruppen sowie Stickstoffatomen, die Bestandteil eines Ringsystems mit aromatischem Charakter sind. Die vorstehend aufgeführten Carboxy-, Carbonyl- und Hydroxygruppen der Komponente c) werden im Kontext der vorliegenden Erfindung als isolierte funktionelle Gruppen angesehen und liegen nicht als Bestandteil komplexerer funktioneller Gruppen vor. Beispielsweise wird eine Verbindung, die lediglich eine Carboxygruppe aufweist, nicht als eine Komponente c) angesehen, obwohl die Carboxygruppe sowohl eine Carbonyl- als auch eine Hydroxygruppe enthält. Ebenso wenig werden beispielsweise Carbonylgruppen, die Bestandteil von Estergruppen (-COOR) sind, als Carbonylgruppen im Sinne der Komponente c) angesehen. Im Falle von Stickstoffatomen als Bestandteil eines Ringsystems mit aromatischem Charakter werden nur die Stickstoffatome selbst als funktionelle Gruppe angesehen und nicht das gesamte aromatische System. Es kann daher an einer anderen Stelle des Ringsystems mit aromatischem Charakter durchaus eine weitere funktionelle Gruppe der Komponente c) lokalisiert sein, beispielsweise eine OH-Gruppe.

Als Verbindung der Komponente c) geeignet sind zum Beispiel β-Dicarbonyl-Verbindungen wie 2,4-Pentandion, 1,1,1-Trifluor-2,4-Pentandion, 1,1,1,5,5,5-Hexafluor-2,4-Pentandion, 2,4-Hexandion, 2,4-Pentandion, 5-Methyl-2,4-hexandion, 2,4-Octandion, 5,5-Dimethyl-2,4-hexandion, 3-Ethyl-2,4-Pentandion, 2,4-Decandion, 2,2-Dimethyl-3,5-Nonandion, 3-Methyl-2,4-pentandion, 2,4-Tridecandion, 1-Cyclohexyl-1,3-butandion, 5,5-Dimethyl-1,3-Ccylohexandion, 1,3-Cyclohexandion, 1-Phenyl-1,3-butandion, 1-(4-Biphenyl)-1,3-butandion, 1-Phenyl-1,3-pentandion, 3-Benzyl-2,4-pentandion, 1-Phenyl-5,5-dimethyl-2,4-hexandion, 1-Phenyl-2-butyl-1,3-butandion, 1-Phenyl-3-3(2-methoxyphenyl)-1,3-propandion, 1-(4-Nitrophenyl)-1,3-butandion, 1-(2-Furyl)-1,3-butandion, 1-(Tetrahydro-2-furyl)-1,3-butandion, Dimedon und Dibenzoylmethan.

Eine weitere Gruppe als Komponente c) geeigneter Verbindungen bilden α-Hydroxy-ketone wie Benzoin, Acetoin und α-Hydroxy-acetophenon und α-Hydroxy-Carbonsäuren wie beispielsweise Mandelsäure, Milchsäure, Citronensäure, Hydroxybernsteinsäure, Ascorbinsäure und Weinsäure, wobei Milchsäure besonders bevorzugt wird. Ferner sind kondensierte aromatische β-Hydroxy-ketone wie zum Beispiel Naphthazarin, 1-Hydroxy-9-fluorenon oder 1-Hydroxyanthrachinon geeignet.

Unter Stickstoffatomen, die Bestandteil eines Ringsystems mit aromatischem Charakter sind, werden Stickstoffatome verstanden, die neben Kohlenstoffatomen als ringbildendes Atom in mindestens monocyclischen Strukturen vorliegen, welche Aromatizität aufweisen, also über eine der Hückel-Regel entsprechende Anordnung von π-Elektronen verfügen. Im Rahmen der vorliegenden Erfindung sind in diesem Kontext zumindest monosubstituierte Stickstoff-haltige Heteroaromaten und unter diesen insbesondere kondensierte Systeme als Komponente c) geeignet, beispielsweise 8-Hydroxychinoline, 2-Hydroxychinoline, 7-Hydroxy-3-H-indole, 8-Hydroxychinoxaline, 8-Hydroxychinazoline, 8-Hydroxycinnoline, 4-Hydroxyphenanthridine, 4-Hydroxyacridine und 1-Hydroxyphenazine, die jeweils weitere Substituenten, zum Beispiel Halogenatome oder Alkylgruppen, aufweisen können.

Die erfindungsgemäßen Zusammensetzungen verfügen somit über mindestens eine zinnorganische Verbindung und über mindestens eine Verbindung des Typs c). Eine derartige Kombination bewirkt ein verzögertes Aushärten der erfindungsgemäßen Zusammensetzung. Dies gibt dem Verbraucher die Möglichkeit, auch nach dem Auftrag und dem Zusammenpressen der zu verklebenden Substrate noch Korrekturen vorzunehmen, zum Beispiel die Substrate bis zum Erreichen der angestrebten Positionen gegeneinander zu verschieben. Besonders bevorzugt umfasst die erfindungsgemäße härtbare Zusammensetzung als Komponente c) Verbindungen, die als zwei- und mehrzählige Liganden zur Ausbildung von Komplexen, insbesondere von Chelatkomplexen, mit der/den Verbindung(en) der Komponente b) befähigt sind.

Bevorzugt weist mindestens eine der Funktionen mindestens einer Verbindung der Komponente c) mindestens ein Sauerstoffatom auf und mindestens eine andere Funktion weist mindestens ein Stickstoffatom auf, das Bestandteil eines Ringsystems mit aromatischem Charakter ist, oder mindestens zwei Funktionen einer Verbindung der Komponente c) weisen jeweils mindestens ein Sauerstoffatom auf, wobei mindestens ein direkt an dieses Sauerstoffatom gebundenes Kohlenstoffatom eine andere Oxidationsstufe aufweist als mindestens ein direkt an dieses Sauerstoffatom gebundenes Kohlenstoffatom der zweiten Funktion. Besonders geeignet in diesem Sinne sind beispielsweise β-Hydroxyketone oder α-Hydroxycarbonsäuren.

Besonders bevorzugt umfasst die Komponente c) mindestens eine N-heteroaromatische Verbindung oder eine α-Hydroxy-Carbonsäure, insbesondere 8-Hydroxychinolin oder Milchsäure. Das bevorzugte Stoffmengenverhältnis (mol/mol) der Gesamtmenge an Verbindung(en) der Komponente c) zur Gesamtmenge der Verbindung(en) der Komponente b) beträgt 1:10 bis 10:1, besonders bevorzugt 1:5 bis 5:1, insbesondere 1:4 bis 4:1 und ganz besonders bevorzugt 1:3 bis 3:1. Der Gewichtsanteil der Summe der Komponenten b) und c) an der erfindungsgemäßen Zusammensetzung beträgt bevorzugt bis zu 5 Gew.-%, insbesondere bis zu 3 Gew.-% und ganz besonders bevorzugt bis zu 2 Gew.-%, jeweils bezogen auf das Gesamtgewicht der Zusammensetzung.

Die erfindungsgemäßen Zusammensetzungen, die als Kleb-, Dicht- oder Beschichtungsstoffe geeignet sind, enthalten neben den vorgenannten Komponenten a), b) und c) gegebenenfalls noch weitere Hilfs- und Zusatzstoffe, die ihnen zum Beispiel verbesserte elastische Eigenschaften, verbesserte Rückstellfähigkeit und geringe Restklebrigkeit verleihen. Zu diesen Hilfs- und Zusatzstoffen gehören Haftvermittler, Weichmacher und Füllstoffe. Darüber hinaus können die Zusammensetzungen als weitere Additive Stabilisatoren, Antioxidantien, Reaktivverdünner, Trockenmittel, UV-Stabilisatoren, Alterungsschutzmittel, rheologische Hilfsmittel, Farbpigmente oder Farbpasten, Fungizide, Flammschutzmittel und/oder gegebenenfalls auch in geringem Umfang Lösungsmittel enthalten.

Unter einem Weichmacher wird eine Substanz verstanden, welche die Viskosität der Zusammensetzungen verringert und damit die Verarbeitbarkeit erleichtert und darüber hinaus Flexibilität und Dehnungsvermögen der Zusammensetzungen verbessert.

Der Weichmacher ist bevorzugt ausgewählt aus einem Fettsäureester, einem Dicarbonsäureester, einem Ester OH-Gruppen tragender oder epoxidierter Fettsäuren, einem Fett, einem Glykolsäureester, einem Phthalsäureester, einem Benzoesäureester, einem Phosphorsäureester, einem Sulfonsäureester, einem Trimellithsäureester, einem epoxidierten Weichmacher, einem Polyether-Weichmacher, einem Polystyrol, einem Kohlenwasserstoff-Weichmacher und einem chlorierten Paraffin, sowie Gemischen aus zwei oder mehr davon. Durch die gezielte Auswahl eines dieser Weichmacher oder einer spezifischen Kombination können weitere vorteilhafte Eigenschaften der erfindungsgemäßen Zusammensetzung, z. B. Geliervermögen der Polymere, Kälteelastizität bzw. Kältebeständigkeit oder auch antistatische Eigenschaften realisiert werden.

Beispielsweise eignen sich aus der Gruppe der Phthalsäureester Dioctylphthalat, Dibutylphthalat, Diisoundecylphthalat, Diisononylphthalat oder Butylbenzylphthalat, von den Adipaten Dioctyladipat, Diisodecyladipat, ferner Diisodecylsuccinat, Dibutylsebacat oder Butyloleat. Von den Polyether-Weichmachern werden bevorzugt endgruppenverschlossene Polyethylenglykole eingesetzt, beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon. Ebenfalls als Weichmacher geeignet sind beispielsweise Ester der Abietinsäure, Buttersäureester, Essigsäureester, Propionsäureester, Thiobuttersäureester, Zitronensäureester sowie Ester auf Nitrocellulose- und Polyvinylacetat-Basis, sowie Gemische aus zwei oder mehr davon. Geeignet sind beispielsweise auch die asymmetrischen Ester von Adipinsäuremonooctylester mit 2-Ethylhexanol (Edenol DOA, Fa. Cognis Deutschland GmbH, Düsseldorf). Darüber hinaus sind als Weichmacher geeignet die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf). Ebenfalls im Rahmen der vorliegenden Erfindung als Weichmacher geeignet sind Diurethane, welche sich beispielsweise durch Umsetzung von Diolen mit OH-Endgruppen mit monofunktionellen Isocyanaten herstellen lassen, indem die Stöchiometrie so gewählt wird, dass im wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Eine für bestimmte Anwendungen zu hohe Viskosität der erfindungsgemäßen Zusammensetzung kann auch durch Verwendung eines Reaktivverdünners auf einfache und zweckmäßige Weise verringert werden, ohne dass es zu Entmischungserscheinungen (z.B. Weichmacherwanderung) in der ausgehärteten Masse kommt. Vorzugsweise weist der Reaktivverdünner mindestens eine funktionelle Gruppe auf, die nach der Applikation zum Beispiel mit Feuchtigkeit oder Luftsauerstoff reagiert. Beispiele für derartige Gruppen sind Silylgruppen, Isocyanatgruppen, vinylisch ungesättigte Gruppen und mehrfach ungesättigte Systeme. Als Reaktivverdünner kann man alle Verbindungen, die mit der erfindungsgemäßen Zusammensetzung unter Verringerung der Viskosität mischbar sind und über mindestens eine mit dem Bindemittel reaktive Gruppe verfügen, allein oder als Kombination mehrerer Verbindungen einsetzen. Die Viskosität des Reaktivverdünners beträgt bevorzugt weniger als 20.000 mPas, besonders bevorzugt etwa 0,1 - 6.000 mPas, ganz besonders bevorzugt 1- 1000 mPas (Brookfield RVT, 23 °C, Spindel 7, 10 U/min).

Als Reaktivverdünner lassen sich z. B. folgende Stoffe einsetzen: mit Isocyanatosilanen umgesetzte Polyalkylenglykole (z.B. Synalox 100-50B, DOW), Alkyltrimethoxysilan, Alkyltriethoxysilan, wie Methyltrimethoxysilan, Methyltriethoxysilan sowie Vinyltrimethoxysilan (XL 10, Wacker), Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-1-propyltriethoxysilan und Teilhydrolysate dieser Verbindungen. Ferner sind ebenfalls folgende Polymere von Kaneka Corp. als Reaktivverdünner einsetzbar: MS S203H, MS S303H, MS SAT 010, und MS SAX 350. Weiterhin als Reaktivverdünner geeignet sind Polymere, die aus einem organischen Grundgerüst durch Pfropfen mit einem Vinylsilan oder durch Umsetzung von Polyol, Polyisocyanat und Alkoxysilan herstellbar sind.

Unter einem Polyol wird eine Verbindung verstanden, die im Molekül eine oder mehrere OH - Gruppen enthält. Die OH -Gruppen können sowohl primär als auch sekundär sein.
Zu den geeigneten aliphatischen Alkoholen zählen beispielsweise Ethylenglykol, Propylenglykol und höhere Glykole, sowie andere polyfunktionelle Alkohole. Die Polyole können zusätzlich weitere funktionelle Gruppen wie z.B. Ester, Carbonate, Amide enthalten. Zur Herstellung eines Reaktivverdünners durch Umsetzung von Polyol mit Polyisocyanat und Alkoxysilan wird die entsprechende Polyolkomponente jeweils mit einem mindestens difunktionellen Isocyanat umgesetzt. Als mindestens difunktionelles Isocyanat kommt grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen bevorzugt.
Unter den Alkoxysilylgruppen sind die Di- und Trialkoxysilylgruppen bevorzugt.

Als Polyisocyanate zur Herstellung eines Reaktivverdünners eignen sich beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder-1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) oder deren partiell oder vollständig hydrierte Cycloalkylderivate, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bis-isocyanatoethylester, 1-Chlormethylphenyl-2,4- oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate.

Ebenso kann man als Polyisocyanate drei- oder höherwertige Isocyanate, wie sie beispielsweise durch Oligomerisierung von Diisocyanaten, insbesondere durch Oligomerisierung der oben genannten Isocyanate, erhältlich sind, einsetzen. Beispiele für solche drei- und höherwertigen Polyisocyanate sind die Tri-isocyanurate von HDI oder IPDI oder deren Gemische oder deren gemischte Triisocyanurate sowie Polyphenylmethylenpolyisocyanat, wie es durch Phosgenierung von Anilin-Formaldehyd-Kondensationsprodukten erhältlich ist.

Zur Reduzierung der Viskosität der erfindungsgemäßen Zusammensetzung lassen sich neben oder anstatt eines Reaktivverdünners auch Lösungsmittel einsetzen. Als Lösungsmittel eignen sich aliphatische oder aromatische Kohlenwasserstoffe, halogenierte Kohlenwasserstoffe, Alkohole, Ketone, Ether, Ester, Esteralkohole, Ketoalkohole, Ketoether, Ketoester und Etherester. Vorzugsweise werden allerdings Alkohole eingesetzt, da in diesem Fall die Lagerstabilität steigt. C₁-C₁₀-Alkohole, besonders Methanol, Ethanol, i-Propanol, Isoamylalkohol und Hexanol werden besonders bevorzugt.

Die erfindungsgemäße Zusammensetzung kann außerdem einen Haftvermittler umfassen. Unter einem Haftvermittler wird eine Substanz verstanden, die die Haftungseigenschaften von Klebeschichten auf Oberflächen verbessert. Es können übliche, dem Fachmann bekannte Haftvermittler (Tackifier) allein oder als Kombination mehrerer Verbindungen eingesetzt werden. Geeignet sind beispielsweise Harze, Terpen-Oligomere, Cumaron-/lnden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich α- od. β-Pinen, Dipenten oder Limonen gewonnen werden. Die Polymerisation dieser Monomere erfolgt in der Regel kationisch unter Initiierung mit Friedel-Crafts-Katalysatoren. Zu den Terpenharzen werden auch Copolymere aus Terpenen und anderen Monomeren, beispielsweise Styrol, α-Methylstyrol, Isopren und dergleichen, gerechnet. Die genannten Harze finden beispielsweise als Haftvermittler für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Haftvermittler im oben genannten Sinne geeignet sind die Kolophoniumharze und deren Derivate, beispielsweise deren Ester oder Alkohole. Besonders gut geeignet sind Silan-Haftvermittler, insbesondere Aminosilane.

In einer speziellen Ausführungsform der erfindungsgemäßen härtbaren Zusammensetzung umfasst die Zusammensetzung ein Silan der allgemeinen Formel (II)

R'R"N-R-SiXYZ (II)

als Haftvermittler, worin
R' und R" unabhängig voneinander Wasserstoff oder C₁-C₈-Alkylreste,
R ein zweibindiger gegebenenfalls ein Heteroatom enthaltender Kohlenwasserstoffrest mit 1 - 12 C-Atomen, und
X, Y, Z unabhängig voneinander C₁-C₈-Alkyl-, C₁-C₈-Alkoxy- oder C₁-C₈-Acyloxyreste sind, wobei mindestens einer der Reste eine C₁-C₈-Alkoxy- oder C₁-C₈-Acyloxygruppe ist. Derartige Verbindungen weisen naturgemäß eine hohe Affinität zu den bindenden Polymerkomponenten der erfindungsgemäßen härtbaren Zusammensetzung, aber auch zu einer großen Bandbreite an polaren sowie unpolaren Oberflächen auf und tragen deshalb zur Ausbildung einer besonders stabilen Haftung zwischen der Klebstoffzusammensetzung und den jeweils zu verklebenden Substraten bei.
Bei der Bindegruppe R kann es sich beispielsweise um einen geradkettigen oder verzweigten oder cyclischen, substituierten oder unsubstituierten Alkylenrest handeln. Gegebenenfalls ist als Heteroatom darin Stickstoff (N) oder Sauerstoff (O) enthalten. Wenn X, Y und/oder Z eine Acyloxygruppe sind, kann dies z. B. die Acetoxygruppe -OCO-CH₃ sein.

Als Füllstoffe für die erfindungsgemäße Zusammensetzung eignen sich beispielsweise Kreide, Kalkmehl, gefällte und/oder pyrogene Kieselsäure, Zeolithe, Bentonite, Magnesiumcarbonat, Kieselgur, Tonerde, Ton, Talg, Titanoxid, Eisenoxid, Zinkoxid, Sand, Quartz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Hackschnitzel, Häcksel, Spreu, gemahlene Walnussschalen und andere Faserkurzschnitte. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet. Darüber hinaus eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis, z.B. Expancel® oder Dualite®, werden beispielsweise in der EP 0 520 426 B1 beschrieben. Diese sind aus anorganischen oder organischen Stoffen zusammengesetzt, jede mit einem Durchmesser von 1 mm oder weniger, bevorzugt von 500 µm oder weniger. Für manche Anwendungen sind Füllstoffe bevorzugt, die den Zubereitungen Thixotropie verleihen. Solche Füllstoffe werden auch als rheologische Hilfsmittel beschrieben, z. B. hydrogenisiertes Rizinusöl, Fettsäureamide oder quellbare Kunststoffe wie PVC. Damit sie gut aus einer geeigneten Dosiervorrichtung (z. B. Tube) ausgepresst werden können, besitzen solche Zubereitungen eine Viskosität von 3.000 bis 15.000, vorzugsweise 4.000 bis 8.000 mPas oder auch 5.000 bis 6.000 mPas.
Die Füllstoffe werden vorzugsweise in einer Menge von 1 bis 80 Gew.-%, bezogen auf das Gesamtgewicht der Zusammensetzung, eingesetzt. Es kann ein einzelner Füllstoff oder eine Kombination mehrerer Füllstoffe verwendet werden.

In einer bevorzugten Ausführungsform der erfindungsgemäßen Zusammensetzung ist der Füllstoff eine hochdisperse Kieselsäure mit einer BET-Oberfläche von 10 bis 90 m²/g, insbesondere von 35 bis 65 m²/g. Bei ihrer Verwendung bewirkt eine derartige Kieselsäure keine wesentliche Erhöhung der Viskosität der erfindungsgemäßen Zusammensetzung, trägt aber zu einer Verstärkung der gehärteten Zubereitung bei. Über diese Verstärkung werden z. B. die Anfangsfestigkeiten, Zugscherfestigkeiten und die Adhäsion der Kleb-, Dicht- oder Beschichtungsstoffe, in denen die erfindungsgemäße Zusammensetzung verwendet wird, verbessert.

Besonders bevorzugt wird eine hochdisperse Kieselsäure mit einer BET-Oberfläche von 45 bis 55 m²/g eingesetzt, insbesondere mit einer BET-Oberfläche von etwa 50 m²/g. Derartige Kieselsäuren weisen den zusätzlichen Vorteil einer um 30 bis 50 % verkürzten Einarbeitungszeit im Vergleich zu Kieselsäuren mit höherer BET-Oberfläche auf. Ein weiterer Vorteil liegt darin, dass sich die genannte hochdisperse Kieselsäure in silanterminierte Kleb-, Dicht- oder Beschichtungsstoffe in erheblich höherer Konzentration einarbeiten lässt, ohne dass die Transparenz und die Fließeigenschaften der Kleb-, Dicht- oder Beschichtungsstoffe beeinträchtigt werden. Besonders bevorzugt wird auch eine Ausführungsform der erfindungsgemäßen Zusammensetzung, in welcher der Füllstoff eine hochdisperse Kieselsäure mit einer durch Laserbeugung gemessenen mittleren Teilchengröße d₅₀ von weniger als 25 µm, bevorzugt von 5 bis 20 µm, ist. Ein solcher Füllstoff ist besonders gut geeignet, wenn hoch transparente, klare Zusammensetzungen für besonders anspruchsvolle Anwendungen benötigt werden. Es ist ebenso denkbar, pyrogene und/oder gefällte Kieselsäuren mit einer höheren BET-Oberfläche, vorteilhafterweise mit 100 - 250 m²/g, insbesondere 110 - 170 m²/g, als Füllstoff einzusetzen. Die Einarbeitung derartiger Kieselsäuren dauert allerdings vergleichsweise lange und ist damit kostenintensiver. Darüber hinaus werden erhebliche Mengen Luft in das Produkt eingebracht, die wiederum umständlich und langwierig entfernt werden muss. Andererseits kann der Effekt einer Verstärkung der gehärteten Zubereitung aufgrund der höheren BET-Oberfläche bei einem geringeren Gewichtsanteil Kieselsäure erzielt werden. Auf diese Weise lassen sich weitere Stoffe einbringen, um die erfindungsgemäße Zubereitung hinsichtlich anderer Anforderungen zu verbessern.

Für den Fall, dass anstelle saurer Füllstoffe ein basischer Füllstoff eingesetzt werden soll, eignen sich zum Beispiel Calciumcarbonate (Kreiden), wobei kubische, nicht kubische, amorphe und andere Modifikationen eingesetzt werden können. Vorzugsweise sind die eingesetzten Kreiden oberflächenbehandelt beziehungsweise beschichtet. Als Beschichtungsmittel werden bevorzugt Fettsäuren, Fettsäureseifen und Fettsäureester eingesetzt, beispielsweise Laurinsäure, Palmitinsäure oder Stearinsäure, Natrium- oder Kaliumsalze solcher Säuren oder ihre Alkylester. Darüber hinaus kommen aber auch andere oberflächenaktive Substanzen wie Sulfatester langkettiger Alkohole oder Alkylbenzolsulfonsäuren beziehungsweise deren Natrium- oder Kaliumsalze oder auch Kopplungsreagenzien auf der Basis von Silanen oder Titanaten in Frage. Mit der Oberflächenbehandlung der Kreiden ist häufig eine Verbesserung der Verarbeitbarkeit sowie der Klebkraft und auch der Wetterresistenz der Zusammensetzungen verbunden. Das Beschichtungsmittel wird üblicherweise in einem Anteil von 0,1 bis 20 Gew.%, bevorzugt 1 bis 5 Gew.%, bezogen auf das Gesamtgewicht der Rohkreide, eingesetzt.

Je nach angestrebtem Eigenschaftsprofil können gefällte oder gemahlene Kreiden verwendet werden. Gemahlene Kreiden können zum Beispiel aus natürlichem Kalk, Kalkstein oder Marmor durch mechanisches Zermahlen hergestellt werden, wobei trockene oder feuchte Methoden zur Anwendung gelangen können. Je nach Mahlverfahren werden Fraktionen mit unterschiedlicher durchschnittlicher Teilchengröße erhalten. Vorteilhafte spezifische Oberflächenwerte (BET) liegen zwischen 1,5 m²/g und 50 m²/g.

Ferner kann die erfindungsgemäße Zusammensetzung Antioxidantien enthalten. Vorzugsweise beträgt der Anteil der Antioxidantien an der erfindungsgemäßen Zusammensetzung bis zu etwa 7 Gew.-%, insbesondere bis zu etwa 5 Gew.-%, bezogen auf das Gesamtgewicht der Zusammensetzung. Die erfindungsgemäße Zusammensetzung kann darüber hinaus UV-Stabilisatoren enthalten. Vorzugsweise beträgt der Anteil der UV-Stabilisatoren an der erfindungsgemäßen Zusammensetzung bis zu etwa 2 Gew.-%, insbesondere etwa 1 Gew.-%. Als UV-Stabilisatoren besonders geeignet sind die so genannten Hindered Amine Light Stabilisators (HALS). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden.

Häufig ist es sinnvoll, die erfindungsgemäßen Zusammensetzungen weiter gegenüber eindringender Feuchtigkeit zu stabilisieren, um die Lagerfähigkeit (shelf-life) noch stärker zu erhöhen. Eine solche Verbesserung der Lagerfähigkeit lässt sich beispielsweise durch den Einsatz von Trockenmitteln erreichen. Als Trockenmittel eignen sich alle Verbindungen, die mit Wasser unter Bildung einer gegenüber den in der Zusammensetzung vorliegenden reaktiven Gruppen inerten Gruppe reagieren, und hierbei möglichst geringe Veränderungen ihres Molekulargewichts erfahren. Weiterhin muss die Reaktivität der Trockenmittel gegenüber in die Zusammensetzung eingedrungener Feuchtigkeit höher sein als die Reaktivität der Endgruppen des in der Zusammensetzung vorliegenden erfindungsgemäßen Silyl-Gruppen tragenden Polymers. Als Trockenmittel eignen sich beispielsweise Isocyanate.

Vorteilhaft werden als Trockenmittel auch Silane eingesetzt, beispielsweise Vinylsilane wie 3-Vinylpropyltriethoxysilan, Oximsilane wie Methyl-O,O',O"-butan-2-on-trioximosilan oder O,O',O",O"'-Butan-2-ontetraoximosilan (CAS Nr. 022984-54-9 und 034206-40-1) oder Benzamidosilane wie Bis(N-methylbenzamido)methylethoxysilan (CAS Nr. 16230-35-6) oder Carbamatosilane wie Carbamatomethyltrimethoxysilan. Aber auch die Verwendung von Methyl-, Ethyl- oder Vinyltrimethoxysilan, Tetramethyl- oder -ethylethoxysilan ist möglich. Besonders bevorzugt sind hier Vinyltrimethoxysilan und Tetraethoxysilan hinsichtlich Effizienz und Kosten. Ebenfalls als Trockenmittel geeignet sind die oben genannten Reaktivverdünner, sofern sie ein Molekulargewicht (Mₙ) von weniger als etwa 5.000 g/mol aufweisen und über Endgruppen verfügen, deren Reaktivität gegenüber eingedrungener Feuchtigkeit mindestens genauso groß, bevorzugt größer, ist als die Reaktivität der reaktiven Gruppen des erfindungsgemäßen Silyl-Gruppen tragenden Polymers. Schließlich können als Trockenmittel auch Alkylorthoformiate oder -orthoacetate eingesetzt werden, beispielsweise Methyl- oder Ethylorthoformiat, Methyl- oder Ethylorthoacetat. Die erfindungsgemäße Zusammensetzung enthält in der Regel etwa 0,01 bis etwa 10 Gew.-% Trockenmittel.

Die erfindungsgemäße Zusammensetzung enthält bevorzugt

| | |
|---|---|
| 100 Gewichtsteile | Komponente a), |
| 0,5 - 25 Gewichtsteile | Haftvermittler, |
| 0,01 - 10 Gewichtsteile | Komponente b), |
| 0,001 - 100 Gewichtsteile | Komponente c), sowie gegebenenfalls |
| 0 - 125 Gewichtsteile | Weichmacher, |
| 0 - 125 Gewichtsteile | Füllstoff, |
| 0-25 Gewichtsteile | Trockenmittel bzw. Wasserfänger, |
| 0-10 Gewichtsteile | weitere Additive wie Pigmente, Stabilisatoren, UV-Absorber, Alterungsschutzmittel, Antioxidantien, rheologische Hilfsmittel, Verdünner bzw. Reaktivverdünner und / oder Lösungsmittel, sowie Fungizide und Flammschutzmittel. Auf diesen Anteilsverhältnissen basierende Zusammensetzungen eröffnen die Möglichkeit, gut verarbeitbare Kleb-, Dicht- oder Beschichtungsstoffe zu erhalten, die neben sehr guten Elastizitätswerten eine gute Festigkeit und Haftung aufweisen. Gleichzeitig können die Eigenschaften der Zusammensetzung durch eine spezifische Gewichtung der Anteile präzise auf das jeweilige Anwendungsgebie abgestimmt werden. |

Die Viskosität der erfindungsgemäßen härtbaren Zusammensetzung beträgt bevorzugt weniger als 1.000.000 mPas (gemessen mit einem Brookfield Viskosimeter Typ RVDVII +, Spindel Nr. 7, 10 Upm bei 23 °C). Besonders bevorzugt ist die Viskosität der erfindungsgemäßen Zusammensetzung kleiner als 500.000 mPas. Insbesondere ist die Viskosität der Zusammensetzung kleiner als 250.000 mPas. Diese Viskositäten ermöglichen eine gute Verarbeitbarkeit der Zusammensetzungen.

Ein weiterer Gegenstand der vorliegenden Erfindung ist ein Verfahren zur Herstellung einer härtbaren erfindungsgemäßen Zusammensetzung, das dadurch gekennzeichnet ist, dass mindestens
a) ein Polyether und/oder mindestens ein Polyacrylsäureester mit mindestens einer Endgruppe der allgemeinen Formel (I)

   -Aₙ-R-SiXYZ (I),

   worin
   A eine zweibindige Bindegruppe,
   R ein zweibindiger gegebenenfalls ein Heteroatom enthaltender Kohlenwasserstoffrest mit 1 - 12 C-Atomen, und
   X, Y, Z unabhängig voneinander C₁-C₈-Alkyl-, C₁-C₈-Alkoxy- oder C₁-C₈-Acyloxyreste sind, wobei mindestens einer der Reste eine C₁-C₈-Alkoxy- oder C₁-C₈-Acyloxygruppe ist, und
   n 0 oder 1 ist;
b) eine zinnorganische Verbindung;
c) eine Verbindung, die frei von Zinn- und Siliziumatomen ist und die mindestens zwei Funktionen aufweist, die jeweils ausgewählt sind aus: Carboxy-, Carbonyl-, Hydroxygruppen sowie Stickstoffatomen, die Bestandteil eines Ringsystems mit aromatischem Charakter sind, sowie gegebenenfalls ein Haftvermittler miteinander gemischt werden.

Ein weiterer Gegenstand der vorliegenden Erfindung ist die Verwendung einer erfindungsgemäßen härtbaren Zusammensetzung oder einer gemäß dem erfindungsgemäßen Verfahren hergestellten härtbaren Zusammensetzung als Kleb-, Dicht- oder Beschichtungsstoff, insbesondere als Klebstoff zum Verkleben von Kunststoffen, Metallen, Glas, Keramik, Holz, Holzwerkstoffen, Papier, Papierwerkstoffen, Gummi und Textilien.

Grundsätzlich können in der vorliegenden Erfindung alle im Rahmen des vorliegenden Textes aufgeführten Merkmale, insbesondere die als bevorzugt und/oder speziell ausgewiesenen Ausführungsformen, Anteilsbereiche, Bestandteile und sonstigen Merkmale der erfindungsgemäßen Zusammensetzung, des erfindungsgemäßen Verfahrens und der erfindungsgemäßen Verwendung in allen möglichen und sich nicht gegenseitig ausschließenden Kombinationen verwirklicht sein, wobei Kombinationen von als bevorzugt und/oder speziell ausgewiesenen Merkmalen ebenfalls als bevorzugt und/oder speziell angesehen werden.

### Beispiele:

### 1. Herstellung eines silanterminierten Polyethers der Komponente a)

328 g (28 mmol) Polypropylenglykol 12000 (OHZ=9,6) werden in einem 500 ml Reaktor bei 80°C im Vakuum getrocknet. Unter Stickstoffatmosphäre wird bei 80°C 0,07 g Bismut(III)octanoat (BorchiKat 24) hinzugegeben und anschließend mit 14 g (67 mmol) Isocyanatopropyltrimethoxysilan (%NCO=19,9) versetzt. Nach einstündigem Rühren bei 80°C wird das entstandene Polymer abgekühlt und mit 7,1 g Vinyltrimethoxysilan und 5,3 g einer Mischung aus 70 Gew.-% Bis(1,2,2,6,6-pentamethyl-4-piperidyl)sebazat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es zu einer härtbaren Zusammensetzung weiterverarbeitet wird.

### 2. Zusammensetzungen und Eigenschaften

**Tab. 1: Zusammensetzungen und Eigenschaften von kieselsauren Formulierungen**

| Beispiel Nr. | | 1 (Vgl.) | 2 | 3 |
|---|---|---|---|---|
| Zusammensetzung (Gew.-Teile) | | | | |
| Polymer aus 1. | | 83,0 | 83,0 | 83,0 |
| Kieselsäure (Aerosil OX 50) | | 10,0 | 10,0 | 10,0 |
| Aminopropyltrimethoxysilan (Geniosil GF 96) | | 5,0 | 5,0 | 5,0 |
| Vinyltrimethoxysilan (Geniosil XL 10) | | 2,0 | 2,0 | 2,0 |
| Dibutylzinndilaurat | | 0,10 | 0,20 | 0,20 |
| Milchsäure | | | 0,05 | |
| Salicylsäure | | | | 0,1 |
| | | | | |

| Eigenschaften | | | | |
|---|---|---|---|---|
| Skin Over Time (min) | | 9 | 18 | 13 |

| Zugscherfestigkeiten an BSP/BSP nach Lagerung bei Normklima für | | | | |
|---|---|---|---|---|
| 0,5 h | N/mm² | 0.13 | 1.16 | 0.4 |
| 1,0 h | N/mm² | 0.7 | 1.53 | 0.9 |
| 2,0 h | N/mm² | 1.98 | 2.44 | 2.2 |
| 7 d | N/mm² | 4.63 | 4.71 | 4.6 |

| | | | | |
|---|---|---|---|---|
| BSP = Buche-Sperrholz | | | | |

Die Beispiele zeigen, dass die Aushärtung (Skin Over Time) der erfindungsgemäßen Zusammensetzungen trotz eines doppelten Gehaltes an Härtungskatalysator (Dibutylzinndilaurat) im Vergleich zur Zusammensetzung des Beispiels 1 signifikant verzögert ist.

**Tab. 2: Zusammensetzungen und Eigenschaften von kreidehaltigen Formulierungen**

| Beispiel Nr. | 4 (Vgl.) | 5 | 6 | 7 |
|---|---|---|---|---|
| Zusammensetzung (Gew.-Teile) | | | | |
| Polymer aus 1. | 28,0 | 28,0 | 28,0 | 28,0 |
| Diisoundecylphthalat | 12,5 | 12,5 | 12,5 | 12,5 |
| Calciumcarbonat (Omyabond 302) | 57,0 | 57,0 | 57,0 | 57,0 |
| Aminopropyltrimethoxysilan (Geniosil GF 96) | 1,0 | 1,0 | 1,0 | 1,0 |
| Vinyltrimethoxysilan (Geniosil XL 10) | 1,4 | 1,4 | 1,4 | 1,4 |
| Dibutylzinndilaurat | 0,2 | 0,20 | 0,20 | 0,20 |
| 8-Hydroxychinolin | | 0,015 | 0,044 | 0,131 |
| | | | | |

| Eigenschaften | | | | |
|---|---|---|---|---|
| Skin Over Time (min) | 5 | 6 | 10 | 50 |

| Zugscherfestigkeiten an BSP/BSP in N/mm² nach Lagerung bei Normklima für | | | | |
|---|---|---|---|---|
| 10 min | 0,59 | 0,6 | 0,16 | 0,2 |
| 30 min | 1,74 | 1,54 | 0,67 | 0,4 |
| 1 h | 2,42 | 2,3 | 1,5 | 0,7 |
| 2 h | 2,66 | 2,6 | 2,2 | 1 |
| 3 h | 2,97 | 2,89 | 2,5 | 1,3 |
| 4 h | 3,4 | 3,5 | 2,8 | 1,9 |
| 6 h | 3,6 | 3,6 | 3,2 | 2,5 |
| 8 h | 3,7 | 3,6 | 3,5 | 2,9 |

Die Beispiele zeigen, dass die mit erfindungsgemäßen Zusammensetzungen hergestellten klebenden Verbindungen eine signifikant verlängerte Verarbeitungszeit (Skin Over Time) aufweisen, dann aber beschleunigt durchhärten und innerhalb kurzer Zeit sehr gute Festigkeitswerte erzielen, die auf dem Niveau einer nicht verzögert aushärtenden Zusammensetzung liegen.

## Patentansprüche

1. Härtbare Zusammensetzung, umfassend als Komponenten
a) mindestens einen Polyether und/oder mindestens einen Polyacrylsäureester mit mindestens einer Endgruppe der allgemeinen Formel (I)
-Aₙ-R-SiXYZ (I),
worin
A eine zweibindige Bindegruppe,
R ein zweibindiger gegebenenfalls ein Heteroatom enthaltender Kohlenwasserstoffrest mit 1 - 12 C-Atomen, und
X, Y, Z unabhängig voneinander C₁-C₈-Alkyl-, C₁-C₈-Alkoxy- oder C₁-C₈-Acyloxyreste sind, wobei mindestens einer der Reste eine C₁-C₈-Alkoxy- oder C₁-C₈-Acyloxygruppe ist, und
n 0 oder 1 ist; sowie
b) mindestens eine zinnorganische Verbindung,
c) mindestens eine Verbindung, die frei von Zinn- und Siliziumatomen ist und die mindestens zwei Funktionen aufweist, die jeweils ausgewählt sind aus: Carboxy-, Carbonyl-, Hydroxygruppen sowie Stickstoffatomen, die Bestandteil eines Ringsystems mit aromatischem Charakter sind, wobei die Komponente c) mindestens eine N-heteroaromatische Verbindung oder eine α-Hydroxy-Carbonsäure umfasst, und es sich bei der N-heteroaromatischen Verbindung um 8-Hydroxychinoline, 2-Hydroxychinoline, 7-Hydroxy-3-H-indole, 8-Hydroxychinoxaline, 8-Hydroxychinazoline, 8-Hydroxycinnoline, 4-Hydroxyphenanthridine, 4-Hydroxyacridine und 1-Hydroxyphenazine, die jeweils weitere Substituenten aufweisen können handelt.

2. Härtbare Zusammensetzung gemäß Anspruch 1, **dadurch gekennzeichnet, dass** das Stoffmengenverhältnis (mol/mol) der Gesamtmenge an Verbindung(en) der Komponente c) zur Gesamtmenge der Verbindung(en) der Komponente b) 1:10 bis 10:1 beträgt.

3. Härtbare Zusammensetzung gemäß mindestens einem der vorstehenden Ansprüche, **dadurch gekennzeichnet, dass** die Komponente a) mindestens einen Polyether- enthält, der ein Molekulargewicht Mₙ von 4.000 bis 100.000 g/mol aufweist.

4. Härtbare Zusammensetzung gemäß mindestens einem der vorstehenden Ansprüche, **dadurch gekennzeichnet, dass** die Komponente a) mindestens einen Polyether enthält, der eine terminale Ungesättigtheit von kleiner als 0,07 meq/g, bestimmt durch die Methode ASTM D4671, aufweist.

5. Härtbare Zusammensetzung gemäß mindestens einem der vorstehenden Ansprüche, **dadurch gekennzeichnet, dass** die Zusammensetzung ein Silan der allgemeinen Formel (II)
R'R"N-R-SiXYZ (II)
als Haftvermittler umfasst, worin
R' und R" unabhängig voneinander Wasserstoff oder C₁-C₈-Alkylreste,
R ein zweibindiger gegebenenfalls ein Heteroatom enthaltender Kohlenwasserstoffrest mit 1 - 12 C-Atomen, und
X, Y, Z unabhängig voneinander C₁-C₈-Alkyl-, C₁-C₈-Alkoxy- oder C₁-C₈-Acyloxyreste sind, wobei mindestens einer der Reste eine C₁-C₈-Alkoxy- oder C₁-C₈-Acyloxygruppe ist.

6. Härtbare Zusammensetzung gemäß mindestens einem der vorstehenden Ansprüche, **dadurch gekennzeichnet, dass** sie
| | |
|---|---|
| 100 Gewichtsteile | Komponente a), |
| 0,5 - 25 Gewichtsteile | Haftvermittler, |
| 0,01 -10 Gewichtsteile | Komponente b), |
| 0,001 - 100 Gewichtsteile | Komponente c), sowie gegebenenfalls |
| 0 - 125 Gewichtsteile | Weichmacher, |
| 0 - 125 Gewichtsteile | Füllstoff, |
| 0 - 25 Gewichtsteile | Trockenmittel bzw. Wasserfänger, |
| 0-10 Gewichtsteile | weitere Additive wie Pigmente, Stabilisatoren, UV-Absorber, Alterungsschutzmittel Antioxidantien, rheologische Hilfsmittel, Verdünner bzw. Reaktivverdünner und/oder Lösungsmittel, sowie Fungizide und Flammschutzmittel enthält |

7. Verfahren zur Herstellung einer härtbaren Zusammensetzung gemäß mindestens einem der Ansprüche 1 bis 6, **dadurch gekennzeichnet, dass** mindestens
a) ein Polyether und/oder mindestens ein Polyacrylsäureester mit mindestens einer Endgruppe der allgemeinen Formel (I)
-Aₙ-R-SiXYZ (I),
worin
A eine zweibindige Bindegruppe,
R ein zweibindiger gegebenenfalls ein Heteroatom enthaltender Kohlenwasserstoffrest mit 1 - 12 C-Atomen, und
X, Y, Z unabhängig voneinander C₁-C₈-Alkyl-, C₁-C₈-Alkoxy- oder C₁-C₈-Acyloxyreste sind, wobei mindestens einer der Reste eine C₁-C₈-Alkoxy- oder C₁-C₈-Acyloxygruppe ist, und
n 0 oder 1 ist;
b) eine zinnorganische Verbindung;
c) eine Verbindung, die frei von Zinn- und Siliziumatomen ist und die mindestens zwei Funktionen aufweist, die jeweils ausgewählt sind aus: Carboxy-, Carbonyl-, Hydroxygruppen sowie Stickstoffatomen, die Bestandteil eines Ringsystems mit aromatischem Charakter sind, wobei die Komponente c) mindestens eine N-heteroaromatische Verbindung oder eine α-Hydroxy-Carbonsäure umfasst, und es sich bei der N-heteroaromatischen Verbindung um 8-Hydroxychinoline, 2-Hydroxychinoline, 7-Hydroxy-3-H-indole, 8-Hydroxychinoxaline, 8-Hydroxychinazoline, 8-Hydroxycinnoline, 4-Hydroxyphenanthridine, 4-Hydroxyacridine und 1-Hydroxyphenazine, die jeweils weitere Substituenten aufweisen können handelt, miteinander gemischt werden.

8. Verwendung einer härtbaren Zusammensetzung gemäß mindestens einem der Ansprüche 1 bis 6 oder einer gemäß einem Verfahren gemäß Anspruch 7 hergestellten härtbaren Zusammensetzung als Kleb-, Dicht- oder Beschichtungsstoff.

## Claims

1. A curable composition, comprising as components
a) at least one polyether and/or at least one polyacrylic acid ester having at least one terminal group of the general formula (I)
-Aₙ-R-SiXYZ (I),
where
A is a divalent linking group,
R is a divalent hydrocarbon residue which has from 1 to 12 C atoms and optionally contains a heteroatom, and
X, Y, Z are, independently of one another, C₁-C₈ alkyl residues, C₁-C₈ alkoxy residues or C₁-C₈ acyloxy residues, wherein at least one of the residues is a C₁-C₈ alkoxy group or a C₁-C₈ acyloxy group, and
n is 0 or 1; and
b) at least one organotin compound,
c) at least one compound which is free of tin atoms and silicon atoms and has at least two functions, which are each selected from: carboxy groups, carbonyl groups, hydroxy groups and nitrogen atoms which are components of a ring system that is aromatic in nature, wherein the component c) comprises at least one N heteroaromatic compound or an α-hydroxycarboxylic acid, and the N heteroaromatic compound is an 8-hydroxyquinoline, 2-hydroxyquinoline, 7-hydroxy-3-H-indole, 8-hydroxy quinoxaline, 8-hydroxyquinazoline, 8-hydroxycinnoline, 4-hydroxy prenanthridine, 4-hydroxyacridine and 1-hydroxyphenazine, which can each have further substituents.

2. The curable composition according to claim 1, **characterized in that** the molar ratio (mol/mol) of the total amount of compound(s) of component c) to the total amount of compound(s) of component b) is from 1:10 to 10:1.

3. The curable composition according to at least one of the preceding claims, **characterized in that** the component a) contains at least one polyether which has a molecular weight Mₙ of from 4000 to 100,000 g/mol.

4. The curable composition according to at least one of the preceding claims, **characterized in that** the component a) contains at least one polyether which has a terminal unsaturation of less than 0.07 meq/g, determined by the method ASTM D4671.

5. The curable composition according to at least one of the preceding claims, **characterized in that** the composition comprises a silane of the general formula (II)
R'R"N-R-SiXYZ (II)
as an adhesion promoter, where
R' and R" are, independently of one another, hydrogen or C₁-C₈ alkyl residues,
R is a divalent hydrocarbon residue which has from 1 to 12 C atoms and optionally contains a heteroatom, and
X, Y, Z are, independently of one another, C₁-C₈ alkyl residues, C₁-C₈ alkoxy residues or C₁-C₈ acyloxy residues, at least one of the residues being a C₁-C₈ alkoxy group or a C₁-C₈ acyloxy group.

6. The curable composition according to at least one of the preceding claims, **characterized in that** it contains
| | |
|---|---|
| 100 parts by weight | component a), |
| 0.5 - 25 parts by weight | adhesion promoter, |
| 0.01 - 10 parts by weight | component b), |
| 0.001 - 100 parts by weight | component c), and optionally |
| 0 - 125 parts by weight | plasticizer, |
| 0 - 125 parts by weight | filler, |
| 0 - 25 parts by weight | desiccant or water scavenger, |
| 0 - 10 parts by weight | further additives such as pigments, stabilizers, UV absorbers, anti-ageing agents, antioxidants, rheological adjuvants, diluents or reactive diluents and/or solvents, and also fungicides and flame retardants. |

7. A method for preparing a curable composition according to at least one of claims 1 to 6, **characterized in that** at least
a) one polyether and/or at least one polyacrylic acid ester having at least one terminal group of the general formula (I)
-Aₙ-R-SiXYZ (I),
where
A is a divalent linking group,
R is a divalent hydrocarbon residue which has from 1 to 12 C atoms and optionally contains a heteroatom, and
X, Y, Z are, independently of one another, C₁-C₈ alkyl residues, C₁-C₈ alkoxy residues or C₁-C₈ acyloxy residues, at least one of the residues being a C₁-C₈ alkoxy group or a C₁-C₈ acyloxy group, and
n is 0 or 1;
b) one organotin compound;
c) one compound which is free of tin atoms and silicon atoms and has at least two functions, which are each selected from: carboxy groups, carbonyl groups, hydroxy groups and nitrogen atoms which are components of a ring system that is aromatic in nature, the component c) comprising at least one N heteroaromatic compound or an α-hydroxycarboxylic acid, and the N heteroaromatic compound being 8-hydroxyquinoline, 2-hydroxyquinoline, 7-hydroxy-3-H-indole, 8-hydroxy quinoxaline, 8-hydroxyquinazoline, 8-hydroxycinnoline, 4-hydroxy prenanthridine, 4-hydroxyacridine and 1-hydroxyphenazine, which can each have further substituents, are mixed together.

8. The use of a curable composition according to at least one of claims 1 to 6 or the use of a curable composition prepared according to a method according to claim 7 as an adhesive, sealant or coating substance.

## Revendications

1. Composition durcissable comprenant comme composants
a) au moins un polyéther et/ou au moins un ester d'acide polyacrylique comportant au moins un groupe terminal de la formule générale (I)
-Aₙ-R-SiXYZ (I),
formule dans laquelle
A représente un groupe de liaison divalent,
R représente un radical hydrocarboné divalent contenant éventuellement un hétéroatome et ayant de 1 à 12 atomes de carbone, et
X, Y, Z, représentent indépendamment un alkyle en C₁ à C₈, un alcoxy en C₁ à C₈ ou un acyloxy en C₁ à C₈, l'un au moins des radicaux étant un groupe acyloxy en C₁ à C₈ ou alcoxy en C₁ à C₈,
n est 0 ou 1 ; ainsi que
b) au moins un composé organostannique,
c) au moins un composé qui est exempt d'atomes d'étain et de silicium et qui comporte au moins deux fonctions qui sont choisies chacune parmi : des groupes carboxyle, carbonyle, hydroxyle et des atomes d'azote qui font partie d'un système cyclique de caractère aromatique, le composant c) comportant au moins un composé N-hétéroaromatique ou un acide α-hydroxy-carboxylique, et le composé N-hétéroaromatique étant choisi parmi les 8-hydroxyquinoléines, les 2-hydroxyquinoléines, les 7-hydroxy-3-H-indoles, les 8-hydroxyquinoxalines, les 8-hydroxyquinazolines, les 8-hydroxycinnolines, les 4-hydroxyphénanthridines, les 4-hydroxyacridines et les 1-hydroxyphénazines qui peuvent comporter chacun d'autres substituants.

2. Composition durcissable selon la revendication 1, **caractérisée en ce que** le rapport molaire (mol/mol) de la quantité totale de composé(s) du composant c) à la quantité totale de composé(s) du composant b) va de 1:10 à 10:1.

3. Composition durcissable selon l'une au moins des revendications précédentes, **caractérisée en ce que** le composant a) contient au moins un polyéther ayant un poids moléculaire Mₙ de 4 000 à 100 000 g/mol.

4. Composition durcissable selon l'une au moins des revendications précédentes, **caractérisée en ce que** le composant a) contient au moins un polyéther ayant une insaturation terminale inférieure à 0,07 meq/g, déterminée par la méthode ASTM D4671.

5. Composition durcissable selon l'une au moins des revendications précédentes, **caractérisée en ce que** la composition comporte un silane de la formule générale (II)
R'R"N-R-SiXYZ (II)
comme promoteur d'adhérence, formule dans laquelle
R' et R" représentent indépendamment l'hydrogène ou des radicaux alkyle en C₁ à C₈,
R représente un radical hydrocarboné divalent contenant éventuellement un hétéroatome et ayant 1 à 12 atomes de carbone, et
X, Y, Z représentent indépendamment des radicaux alkyle en C₁ à C₈, alcoxy en C₁ à C₈ ou acyloxy en C₁ à C₈, l'un au moins des radicaux étant un groupe alcoxy en C₁ à C₈ ou acyloxy en C₁ à C₈.

6. Composition durcissable selon l'une au moins des revendications précédentes, **caractérisée en ce qu'**elle contient
| | |
|---|---|
| 100 parties en poids | du composant a), |
| 0,5 à 25 parties en poids | de promoteur d'adhérence, |
| 0,01 à 10 parties en poids | du composant b), |
| 0,001 à 100 parties en poids | du composant c), et éventuellement |
| 0 à 125 parties en poids | de plastifiant, |
| 0 à 125 parties en poids | de charge, |
| 0 à 25 parties en poids | de déshydratant ou d'hydroabsorbant, |
| 0 à 10 parties en poids | d'autres additifs tels que des pigments, des stabilisants, des |
| | absorbeurs d'UV, desagents antivieillissement, des antioxydants, des adjuvants rhéologiques, des diluants ou des diluants réactifs et/ou des solvants, ainsi que des fongicides et des agents |

7. Procédé de production d'une composition durcissable selon l'une au moins des revendications 1 à 6, **caractérisé en ce que**
a) au moins un polyéther et/ou au moins un ester d'acide polyacrylique comportant au moins un groupe terminal de la formule générale (I)
-Aₙ-R-SiXYZ (I),
formule dans laquelle
A représente un groupe de liaison divalent,
R représente un radical hydrocarboné divalent contenant éventuellement un hétéroatome et ayant de 1 à 12 atomes de carbone, et
X, Y, Z, représentent indépendamment un alkyle en C₁ à C₈, un alcoxy en C₁ à C₈ ou un acyloxy en C₁ à C₈, l'un au moins des radicaux un groupe acyloxy en C₁ à C₈ ou alcoxy en C₁ à C₈, et
n est 0 ou 1 ; ainsi que
b) au moins un composé organostannique,
c) au moins un composé qui est exempt d'atomes d'étain et de silicium et qui comporte au moins deux fonctions qui sont choisis chacune parmi : des groupes carboxyle, carbonyle, hydroxyle et des atomes d'azote qui font partie d'un système cyclique de caractère aromatique, le composant c) comportant au moins un composé N-hétéroaromatique ou un acide α-hydroxy-carboxylique, et le composé N-hétéroaromatique étant choisi parmi les 8-hydroxyquinoléines, les 2-hydroxyquinoléines, les 7-hydroxy-3-H-indoles, les 8-hydroxyquinoxalines, les 8-hydroxyquinazolines, les 8-hydroxycinnolines, les 4-hydroxyphénanthridines, les 4-hydroxyacridines et les 1-hydroxyphénazines qui peuvent comporter chacun d'autres substituants, sont mélangés entre eux.

8. Utilisation d'une composition durcissable selon l'une au moins des revendications 1 à 6 ou d'une composition durcissable produite selon un procédé selon la revendication 7, comme substance adhésive, substance d'étanchéité ou substance de revêtement.
